# EUROPÄISCHE PATENTSCHRIFT

(11) **EP 0 551 637 B1**
(45) Veröffentlichungstag und Bekanntmachung des Hinweises auf die Patenterteilung: **24.05.1995**
(21) Anmeldenummer: 92121741.0
(22) Anmeldetag: 21.12.1992
(51) Int. Cl.: C01G 31/00, C09C 1/00

(54) **Bismutvanadatpigmente**
Bismuth vanadate pigments
Pigments à base de vanadate de bismuth

(30) Priorität: 16.01.1992 DE 4200925
(43) Veröffentlichungstag der Anmeldung: 21.07.1993
(73) Patentinhaber: BASF Aktiengesellschaft, 67063 Ludwigshafen (DE)
(72) Erfinder: Liedek, Egon, Dr., W-7300 Esslingen (DE); Knittel, Helmut, Dr., W-7141 Ludwigsburg (DE); Reisacher, Hans-Ulrich, Dr., W-7056 Weinstadt (DE); Mronga, Norbert, Dr., W-6915 Dossenheim (DE); Ochmann, Harald, Dr., W-6701 Dannstadt-Schauernheim (DE); Wienand, Henning, Dr., W-6823 Neulussheim (DE)

(56) Entgegenhaltungen:
- EP-A- 0 441 101
- WO-A-92/11205
- DE-A- 3 221 338
- FR-A- 2 355 779
- FR-A- 2 434 191

## Beschreibung

Aus den US-Patentschriften 4,115,141 und 4,115,142 sind monokline Bismutvanadatpigmente und ein Verfahren zu ihrer Herstellung bekannt. Die gemäß den Angaben dieser Patentschriften hergestellten Produkte entsprechen jedoch nicht den heutigen koloristischen Anforderungen.

Weiterhin sind in der US-Patentschrift 4 251 283 und der EP-A-441 101 Bismutvanadatpigmente beschrieben, die phosphorhaltig sind und über eine Festkörperreaktion erhalten werden. Auch diese Produkte entsprechen koloristisch nicht den Anforderungen.

In den Schutzrechten EP-A-239 526, EP-A-74 049 und DE-A-31,06,625 sind tetragonale Bismutvanadatpigmente beschrieben, die nicht die Brillanz der monoklinen Produkte erreichen.

Aus der DE-OS 40 37 878 sind Versuche bekannt, Bismutvanadate gegenüber dem Angriff von Salzsäure zu stabilisieren und aus der EP-A-304 399 ergibt sich das Bemühen, koloristisch verbesserte Produkte zu gewinnen.

Schließlich sind in der WO-A-92/11205 (Dokument nach Art. 54(3) EPÜ) Bismutvanadatpigmente beschrieben, die neben Phosphor ».a. auch Mo, Ti, Si, Ge, Zr, W in breiter Variation enthalten kömmen.

Da der Stand der Technik noch keine Möglichkeit bietet, alle koloristischen und anwendungstechnischen Wünsche zu befriedigen, bestand die Aufgabe, weiterhin verbesserte Bismutvanadatpigmente zu entwickeln.

Diese Aufgabe wurde gelöst durch röntgenographisch im wesentlichen monoklines Bismutvanadat der Formel Bi[(V₁₋ₓPₓ)O₄], in der X 0 bis 0,1 bedeutet, gekennzeichnet durch ein Chroma von ≧ 85, eine Helligkeit von ≧ 80, einen Farbwinkel von 89 bis 95 und eine Photochromie mit einem ΔE-Wert von ≦ 2 im CIE LAB-System.

Die im CIELAB-System verwendeten Begriffe Chroma, Helligkeit und Farbwinkel sind aus der Literatur bekannt, beispielsweise sei Hans G. Völz, Industrielle Farbprüfung, Grundlagen und Methoden, VCH Verlagsgesellschaft mbH, Weinheim, 1990 sowie R.W.G. Hunt, Measuring Colour, Ellis Horwood Limited, West Sussex (England) 1987, als Referenz erwähnt.

Unter Photochromie wird entsprechend Römpps Chemie-Lexikon Bd. 4 (1985), die durch sichtbares oder ultraviolettes Licht hervorgerufene, reversible Umwandlung eines Stoffes in einen anderen, der sich von der Ausgangsverbindung durch seine Farbe (Absorptionsspektrum) unterscheidet, verstanden.

Die erfindungsgemäßen Produkte haben vorzugsweise X-Werte von 0.001 bis 0.08 und insbesondere solche von 0.01 bis 0.06.

Weiterhin sind bevorzugt Pigmente mit X 0.002 bis 0.01.

Zur Herstellung der erfindungsgemäßen Produkte geht man zweckmäßigerweise so vor, daß man eine alkalische Lösung von Alkali- oder Ammoniumvanadat in Gegenwart eines löslichen Phosphates
a) mit einer sauren Bismutsalzlösung versetzt, mit Alkali den pH-Wert auf 3 bis 6,5 einstellt und ihn dort durch weitere Alkalizugabe während des anschließenden Erhitzens auf bis zu 100°C hält, bis er nicht mehr absinkt, nach 0,5 bis 5 Stunden das Produkt isoliert, salzfrei wäscht, trocknet und bei 300 bis 500°C tempert oder
b) zu einer sauren Bismutsalzlösung zugibt, den pH-Wert auf 2 bis 5 einstellt, ungefähr 1 Stunde unter diesen Bedingungen rührt, dann den pH-Wert auf 5 bis 8 erhöht, unter Einhaltung dieses pH-Wertes auf Rückflußtemperatur erhitzt, anschließend ungefähr 0,5 bis 2 Stunden weiter erhitzt, das Produkt isoliert, wäscht und trocknet.

Einzelheiten der Herstellung können den Beispielen entnommen werden, in denen sich Angaben über Teile und Prozente, sofern nicht anders vermerkt, auf das Gewicht beziehen.

Bei der Herstellung der erfindungsgemäßen Pigmente kann man eine weitere Verbesserung der Eigenschaften erzielen, wenn man vor der Umsetzung Alkali- oder Erdalkalisulfat, -borat oder -perborat zur alkalischen Vanadatlösung zugibt und zwar in Mengen von 5 bis 50, vorzugsweise 5 bis 30 Mol.-%, bezogen auf die Bismut-Konzentration.

Als Alkaliionen für die Vanadate und die vorstehend genannten Anionen sind insbesondere Natrium und Kalium zu nennen, Bismut wird vorzugsweise als Nitrat verwendet.

Vor dem Erhitzen der Pigmente in der wäßrigen Suspension kann es zweckmäßig sein, eine hydrothermale Behandlungsstufe einzuschieben, weil dadurch die Kristallinität verbessert werden kann. Üblicherweise werden dabei Temperaturen von 110 bis 300, vorzugsweise 150 bis 250°C, angewendet.

Anschließend an die erfindungsgemäße Herstellung kann man die Pigmente noch einer Stabilisierungsbehandlung unterziehen, wie sie beispielsweise in der US-Patentschrift 4 063 956 beschrieben ist. Es erhöhen sich dadurch die thermische Stabilität und die Resistenz gegenüber Säuren und reduzierenden Agenzien.

Die erfindungsgemäßen Pigmente eignen sich beispielsweise zum Färben von Kunststoffen, Lacken und kosmetischen Präparaten, wobei der Lackbereich hervorzuheben ist.

Die Lackierungen für die koloristische Beurteilung der Pigmente werden so hergestellt, daß zunächst 20 g Pigment in 80 g Alkyd-Melamin-Einbrennlack (45 % Festkörperanteil) mit 150 g Glaskugeln (3 mm Durchmesser) 60 Minuten mit einem Skandexgerät geschüttelt und anschließend auf Aluminium-Q-Panels deckend appliziert (Spritzverfahren) und bei 130°C 30 Minuten lang eingebrannt werden. Diese Lackierungen werden dann mit einem Zeiss-Spektralphotometer RFC 16 zur Ermittlung der koloristischen Daten vermessen.

Die Photochromie wird durch Abdeckung der einen Hälfte des Panels mit einer Blechblende und anschließender dreistündiger Bestrahlung mit einem 1000 Watt Flutlichtstrahler (Sylvania, 1000 W Halogenlampe, Code-Nr. 21 625 9, bündelt) mit 45 cm Belichtungsabstand und direkt anschließender, vergleichender Vermessung des belichteten und des unbelichteten Teils des jeweiligen Panels mittels oben genannten Geräts ermittelt (Differenz der Mittelwerte aus jeweils drei Meßwerten).

### Beispiele

### Beispiel 1

121,25 g Bi(NO₃)₃ *5H₂O werden in 600 ml 1N HNO₃ gelöst. Dazu wird unter Rühren eine Lösung aus 34,9 g NaVO₃ *H₂O und 22 g NaOH in 598 ml H₂O gegeben. Anschließend wird mit 30 %iger NaOH ein pH von 3,5 eingestellt, danach 1 Stunde bei Raumtemperatur gerührt.

Danach wird mit 1N NaOH der pH-Wert innerhalb von einer Stunde von 3,5 auf 6,0 erhöht und anschließend auf Rückflußtemperatur erhitzt, wobei der pH durch Zugabe von 1N Natronlauge auf 6 gehalten wird. Nach drei Stunden wird auf Raumtemperatur abgekühlt, das Produkt abfiltriert, salzfrei gewaschen und bei 90°C im Vakuum getrocknet. Das Röntgenpulverdiagramm zeigt die Linien der monoklinen Kristallmodifikation des Bismutvanadats.

Das Pigment wird nach oben beschriebenem Verfahren geprüft, die koloristischen Daten sind: H° = 90,5; C* = 86,8; L* = 80,0; Photochromie Δ E = 1,3

### Beispiel 2

Verfahren wie in Beispiel 1, es werden jedoch 60,6 g Bi(NO₃)₃ *5H₂O in 240 ml 1N HNO₃ gelöst und eine Lösung, bestehend aus 17,45 g NaVO₃ *H₂O und 10 g NaOH in 274 ml H₂O, die zusätzlich noch 11,4 g Na₃ PO₄ *12H₂O enthält, zugegeben.
- Kristallsystem: : monoklin
- Phosphorgehalt: : < 0,03 %
- Koloristik: : H° = 90,7; C* = 91,2; L* = 83,0;
- Photochromie: : Δ E = 0,2

### Beispiel 3

Verfahren wie Beispiel 2, jedoch wird als Bismutkomponente eine Mischung aus 237,2 g einer elfprozentigen Bismutnitratlösung mit 5,4 g 65 %iger Salpetersäure und 45 g Wasser eingesetzt.
- Kristallsystem: : monoklin
- Phosphorgehalt: : < 0,03 %
- Koloristik: : H° = 90,7; C* = 92,3; L* = 82,9;
- Photochromie: : Δ E = 0,6

### Beispiel 4

Einsatzstoffe und Verfahren wie Beispiel 3, aber die Abkühlung erfolgt nicht bereits nach 3 sondern erst nach 5 Stunden Rückfluß.
- Kristallsystem: : monoklin
- Phosphorgehalt: : < 0,03 %
- Koloristik: : H° = 90,7; C* = 90,7; L* = 82,2;
- Photochromie: : Δ E = 0,3

### Beispiel 5

Verfahren wie Beispiel 3, es wird aber nur die Hälfte, d.h. 5,7 g Na₃ PO₄ *H₂O eingesetzt.
- Kristallsystem: : monoklin
- Phosphorgehalt: : < 0,03 %
- Koloristik: : H° = 90,9; C* = 91,4; L* = 82,6;
- Photochromie: : Δ E = 1,4

### Beispiel 6

Verfahren wie Beispiel 3, es werden aber der Bismutlösung mehr als die doppelte Menge Salpetersäure, d.h. 11,9 g, und der Vanadatlösung anstelle von Na₃ PO₄ *H₂O 4,62 g NaBO₂ *H₂O₂ *3H₂O zugesetzt.
- Kristallsystem: : monoklin
- Borgehalt: : < 0,01 %
- Koloristik: : H° = 92,0; C* = 92,2; L* = 83,9;
- Photochromie: : Δ E = 1,8

### Verfahren 7

Verfahren wie Beispiel 5, es werden aber der Bismutlösung die doppelte Menge Salpetersäure, d.h. 10,8 g, und der Vanadatlösung zusätzlich 2,31 g NaBO₂ *H₂O₂ *3H₂O zugesetzt.
- Kristallsystem: : monoklin
- Phosphorgehalt: : < 0,01 %
- Borgehalt: : < 0,01 %
- Koloristik: : H° = 91,4; C* = 92,4; L* = 83,4;
- Photochromie: : Δ E = 0,1

### Beispiel 8

Verfahren wie Beispiel 7, es wird aber die eineinhalbfache Ansatzmenge verwendet und der Vanadatlösung werden nur 4,28 g Natriumphosphat zugesetzt.
- Kristallsystem: : monoklin
- Phosphorgehalt: : < 0,01 %
- Borgehalt: : < 0,01 %
- Koloristik: : H° = 90,8; C* = 93,4; L* = 83,7;
- Photochromie: : Δ E = 0,6

### Beispiel 9

Verfahren und Einsatzstoffe wie Beispiel 7, aber anstelle von pH 3,5 wird pH 4 eingestellt und dort eine Stunde bei Raumtemperatur belassen.
- Kristallsystem: : monoklin
- Phosphorgehalt: : 0,02 %
- Borgehalt: : < 0,01 %
- Koloristik: : H° = 91,6; C* = 92,4; L* = 84,3;
- Photochromie: : Δ E = 0,5

### Beispiel 10

15,7 g V ≙ 196,5 ml Natriumvanadatlösung mit einem Gehalt von 79,92 g Vanadin pro Liter werden mit 500 ml Wasser verdünnt und mit 2,3 g H₃PO₄ (85 %ig) versetzt. Zu dieser Mischung werden unter Rühren 68,7 g Bi ≙ 621,7 g Bismutnitratlösung mit einem Gehalt von 11,05 % Bi in ca. 40 Min. zugegeben.

Anschließend wird mit 30 %iger NaOH in ca. 1 Std. auf pH 4,5 (NaOH-Verbrauch ca. 140 ml) und anschließend mit 5 %iger NaOH in ca. 10 Min. auf pH 5 gestellt.

Es wird 1 Std. gerührt und der pH bei 5 gehalten.

Danach wird die hellbraune Suspension unter Einhaltung von pH 5 auf 95°C erhitzt. Nach ca. 1 Std. wird die Suspension gelb und der pH steigt zügig auf pH 7,6. Es wird bis zur pH-Konstanz gerührt, dann wird das Produkt abfiltriert und salzfrei gewaschen. Das Filtergut wird mit Wasser auf 800 ml gebracht und auf 80°C erhitzt. Zu dieser Suspension gibt man eine Lösung von 15,4 g Al (NO₃)₃ · 9H₂O in 100 ml Wasser, wobei der pH mit 10 %iger Sodalösung bei pH 7 gehalten wird. Danach wird eine Suspension von 2,6 g Ca(OH)₂ in 100 ml Wasser gleichzeitig mit 2,7 g H₃PO₄ (85 %ig) in 100 ml Wasser zugegeben und der pH mit Sodalösung (10 %ig) bei 6,5 gehalten (Sodaverbrauch ca. 48 ml).

Das Produkt wird abfiltriert, salzfrei gewaschen und bei 110°C getrocknet. Das Röntgenpulverdiagramm zeigt die Linien der monoklinen Kristallmodifikation des Bismutvanadats. Das getrocknete Produkt wird auf 400°C erhitzt und 30 Min. bei dieser Temperatur gehalten. Das Pigment zeigt folgende koloristische Daten:
H° = 93,6; C* = 93,2; L* = 88,5;
- Photochromie: : Δ E = 0,2

## Patentansprüche

1. Röntgenographisch im wesentlichen monoklines Bismutvanadat der Formel Bi[(V₁₋ₓPₓ)O₄] in der X O bis 0,1 bedeutet, gekennzeichnet durch ein Chroma von ≧ 85, eine Helligkeit von ≧ 80, einen Farbwinkel von 89 bis 95 und eine Photochromie mit einem Δ E-Wert von ≦ 2 im CIE LAB-System.

2. Bismutvanadat gemäß Anspruch 1 mit X = 0,001 bis 0,08.

3. Bismutvanadat gemäß Anspruch 1 mit X = 0,01 bis 0,06.

4. Bismutvanadat gemäß Anspruch 1 mit X = 0,002 bis 0,01.

5. Verfahren zur Herstellung von Bismutvandadat gemäß Anspruch 1, durch Fällung aus einer wäßrigen Bismutsalzlösung mit einer Vanadatlösung, dadurch gekennzeichnet, daß man eine alkalische Lösung von Alkali- oder Ammoniumvanadat in Gegenwart eines löslichen Phosphates
a) mit einer sauren Bismutsalzlösung versetzt, mit Alkali den pH-Wert auf 3 bis 6,5 einstellt und ihn dort durch weitere Alkalizugabe während des anschließenden Erhitzens auf bis zu 100°C hält, bis er nicht mehr absinkt, nach 0,5 bis 5 Stunden das Produkt isoliert, salzfrei wäscht, trocknet und bei 300 bis 500°C tempert oder
b) zu einer sauren Bismutsalzlösung zugibt, den pH-Wert auf 2 bis 5 einstellt, ungefähr 1 Stunde unter diesen Bedingungen rührt, dann den pH-Wert auf 5 bis 8 erhöht, unter Einhaltung dieses pH-Wertes auf Rückflußtemperatur erhitzt, anschließend ungefähr 0,5 bis 5 Stunden weiter erhitzt, das Produkt isoliert, wäscht und trocknet.

6. Verfahren gemäß Anspruch 5, dadurch gekennzeichnet, daß man vor der Umsetzung Alkali- oder Erdalkalisulfat, -borat oder -perborat zur alkalischen Vanadatlösung zugibt.

7. Verfahren gemäß Anspruch 6, dadurch gekennzeichnet, daß man 5 bis 50 Molprozent an Zusatzstoffen zur Vanadatlösung zusetzt.

8. Verfahren gemäß Anspruch 5 und 6, dadurch gekennzeichnet, daß man die nach der Umsetzung erhaltene Suspension unter hydrothermalen Bedingungen 0,1 bis 5 Stunden bei 110 bis 300°C behandelt.

## Claims

1. An essentially monoclinic bismuth vanadate of the formula Bi[(V₁₋ₓPₓ)O₄] where x is from 0 to 0.1 with a chroma of ≧ 85, a lightness of ≧ 80, a hue angle of from 89 to 95 and a photochromism with a ΔE value of ≦ 2 under the CIELAB system.

2. A bismuth vanadate as claimed in claim 1 where x is from 0.001 to 0.08.

3. A bismuth vanadate as claimed in claim 1 where x is from 0.01 to 0.06.

4. A bismuth vanadate as claimed in claim 1 where x is from 0.002 to 0.01.

5. A process for preparing a bismuth vanadate as claimed in claim 1 by precipitation from an aqueous bismuth salt solution using a vanadate solution, which comprises taking an alkaline solution of an alkali metal vanadate or of ammonium vanadate and with a soluble phosphate present
a) adding to it an acidic bismuth salt solution, adjusting the pH with alkali to 3 - 6.5 and maintaining it at that level by further addition of alkali during the subsequent heating at up to 100°C until the pH ceases to decrease, after 0.5 - 5 hours isolating the product, washing it salt-free, drying, and heat-treating it at 300 - 500°C, or
b) adding it to an acidic bismuth salt solution, adjusting the pH to 2 - 5, stirring under these conditions for about 1 hour, then raising the pH to 5 - 8, heating to the reflux temperature while maintaining that pH, then continuing heating for about a further 0.5 - 5 hours, isolating the product and washing and drying it.

6. A process as claimed in claim 5, wherein an alkali or alkaline earth metal sulfate, borate or perborate is added to the alkaline vanadate solution before the reaction.

7. A process as claimed in claim 6, wherein from 5 to 50 mole percent of additives is added to the vanadate solution.

8. A process as claimed in either of claims 5 and 6, wherein the suspension obtained from the reaction is treated under hydrothermal conditions at from 110 to 300°C for from 0.1 to 5 hours.

## Revendications

1. Vanadate de bismuth en essence monoclinique selon la radiographie aux rayons X, répondant à la formule Bi[(V₁₋ₓPₓ)O₄] dans laquelle x a une valeur qui varie de 0 à 0,1, caractérisé par un degré de teinte égal ou supérieur à 85, un éclat égal ou supérieur à 80, un angle de coloration de 89 à 95 et une photochromie avec une valeur Δ E égale ou inférieure à 2 dans le système CIELAB.

2. Vanadate de bismuth suivant la revendication 1 où × varie de 0,001 à 0,08.

3. Vanadate de bismuth suivant la revendication 1 où × varie de 0,01 à 0,06.

4. Vanadate de bismuth suivant la revendication 1 où × varie de 0,002 à 0,01.

5. Procédé de préparation du vanadate de bismuth suivant la revendication 1, par précipitation à partir d'une solution aqueuse de sel de bismuth avec une solution de vanadate, caractérisé en ce qu'à une solution alcaline d'un vanadate de métal alcalin ou d'ammonium et en présence d'un phosphate soluble,
a) on ajoute une solution acide de sel de bismuth, on règle la valeur du pH à 3-6,5 à l'aide d'un alcali et l'y maintient par addition complémentaire d'alcali au cours du chauffage subséquent jusqu'à 100°C, jusqu'à ce qu'il ne diminue plus, on isole le produit après 0,5 à 5 heures, on le lave jusqu'à ce qu'il soit dépourvu de sel, on le sèche et on le soumet à un traitement thermique à 300-500°C, ou bien
b) on ajoute la solution alcaline susmentionnée de vanadate d'alcali ou d'ammonium, en présence d'un phosphate soluble, à une solution acide de sel de bismuth, on règle le pH à une valeur qui varie de 2 à 5, on agite le tout pendant environ 1 heure dans ces conditions, puis on élève la valeur du pH jusqu'à 5-8, on chauffe le tout jusqu'à la température de reflux avec maintien de la valeur de pH précitée, on poursuit ensuite davantage le chauffage pendant environ 0,5 à 5 heures, on isole le produit, on le lave et on le sèche.

6. Procédé suivant la revendication 5, caractérisé en ce que, préalablement à la réaction, on ajoute un perborate, un borate, ou un sulfate de métal alcalin ou de métal alcalino-terreux à la solution alcaline de vanadate.

7. Procédé suivant la revendication 6, caractérisé en ce que l'on ajoute de 5 à 50% molaires d'additifs à la solution de vanadate.

8. Procédé suivant l'une quelconque des revendications 5 et 6, caractérisé en ce que, après la réaction, on traite la suspension obtenue dans des conditions hydrothermiques à 110-300°C pendant 0,1 à 5 heures.
